# EUROPÄISCHE PATENTSCHRIFT

(11) **EP 3 172 550 B1**
(45) Veröffentlichungstag und Bekanntmachung des Hinweises auf die Patenterteilung: **11.12.2019**
(21) Anmeldenummer: 15745427.3
(22) Anmeldetag: 24.07.2015
(51) Int. Cl.: G01M 13/02, G01M 17/007

(54) **VERFAHREN UND PRÜFSTAND ZUM TESTEN EINES VERBUNDES VON KOMPONENTEN EINES FAHRZEUGS**
METHOD AND TEST RIG FOR TESTING A COMBINATION OF COMPONENTS OF A VEHICLE
PROCÉDÉ ET BANC D'ESSAI POUR TESTER UN RACCORDEMENT DE COMPOSANTS D'UN VÉHICULE

(30) Priorität: 25.07.2014 AT 505252014
(43) Veröffentlichungstag der Anmeldung: 31.05.2017
(73) Patentinhaber: AVL List GmbH, 8020 Graz (AT)
(72) Erfinder: PFISTER, Felix, A-8010 Graz (AT)
(74) Vertreter: Patentanwälte Pinter & Weiss OG
(86) Internationale Anmeldenummer: PCT/EP2015/066958
(87) Internationale Veröffentlichungsnummer: WO 2016/012575

(56) Entgegenhaltungen:
- EP-A2- 1 382 955
- DE-B3-102006 035 502

## Beschreibung

Die gegenständliche Erfindung betrifft ein Verfahren und einen Prüfstand zum Testen eines Verbundes von Komponenten eines Fahrzeugs mit zumindest einem Fahrzeugsteuergerät, das eine Antriebsstrangdrehzahl verarbeitet, und einem Bremssystem, das auf den Antriebsstrang wirkt, auf einem Prüfstand, wobei der Antriebsstrang des Fahrzeugs von einem Antriebsaggregat angetrieben wird und dem Antriebsstrang mittels einer damit verbundenen Belastungsmaschine ein Belastungsdrehmoment eingeprägt wird und zumindest eine Komponente des Verbundes vom Fahrzeugsteuergerät in Abhängigkeit von der Antriebsstrangdrehzahl geregelt wird.

In Fahrzeugen gibt es eine Vielzahl von Fahrzeugsteuergeräten, wie z.B. ein Hybridsteuergerät, ein Motorsteuergerät, ein Getriebesteuergerät, ein Fahrdynamikregelsystem, usw. um nur einige zu nennen, die über einen oder mehrere Fahrzeugbus(se) miteinander vernetzte sein können. Viele dieser Fahrzeugsteuergeräte verarbeiten eine Drehzahl, die entweder an einem Fahrzeugrad, z.B. mittels der ABS-Drehzahlsensoren, oder an einer Komponente des Antriebsstranges, beispielsweise am Getriebeein- oder -ausgang, an einem Differenzialgetriebe, am Ausgang eines Elektromotors in einem Hybridantriebsstrang, gemessen werden. Ein typisches Beispiel für ein solches Fahrzeugsteuergerät in einem Fahrzeug ist das Fahrdynamikregelsystem, das eine Drehzahl eines Fahrzeugrades, bzw. in der Regel Drehzahlen aller Fahrzeugräder, verarbeitet, um ein Bremssystem des Fahrzeugs zu steuern.

Unter Fahrdynamikregelung (FDR) wird im Allgemeinen ein elektronisch gesteuertes Fahrassistenzsystem für Kraftfahrzeuge verstanden, das durch gezieltes Abbremsen einzelner Räder dem Ausbrechen des Fahrzeuges entgegenwirkt, bzw. ganz allgemein einen Beitrag zu Fahrsicherheit und Fahrkomfort liefert. Fahrdynamikregler sind eine Erweiterung und Verknüpfung des bekannten Bremssystems mit Antiblockiersystem (ABS) und Antischlupfregelung (ASR) und einer elektronischen Bremskraftverteilung. Auch ein Bremsassistent oder die Handbremse kann dazu kombiniert werden. Nachfolgend wird hierfür der Begriff Fahrdynamikregelsystem (FDR) verwendet. Ein Fahrdynamikregelsystem ist damit weiter gefasst als ein Bremssystem, schließt aber das Bremssystem mit ein.

Es gibt unterschiedliche Vorgehensweisen zum Entwickeln und Testen von Fahrdynamikregelsystemen (FDR). Ganz zu Beginn steht in der Regel eine reine Simulation des Bremssystems als Teil des Fahrdynamikregelsystemen (FDR). Die Bremssystemsteuereinheit wird dann häufig in einem sogenannten Hardware-in-the-Loop (HiL) Prüfstand weiterentwickelt bzw. getestet. Dabei wird die Bremsenhardware mittels Modellen simuliert und die Bremssystemsteuereinheit anhand der Simulation entwickelt bzw. weiterentwickelt. Damit können unterschiedliche Funktionalitäten der Bremssystemsteuereinheit, wie z.B. ABS, ASR, Hill-Holder, Handbremse, etc., entwickelt und getestet werden. Weiters wurden bisher im realen Fahrzeug verbaute reale Bremssysteme getestet, z.B. auf einer Teststrecke, auf der das Fahrzeug real bewegt wird oder auf einem Rollenprüfstand. Reale Fahrversuche sind aber zum einen aufwendig und zum anderem kaum reproduzierbar.

Dasselbe gilt im Wesentlichen auch für andere Steuergeräte des Fahrzeugs, auch wenn die Erfindung im Folgenden am konkreten Beispiel eines Fahrdynamikregelsystems erläutert wird.

Aus der US 2010/0286880 A1 geht ein Verfahren zum Überprüfen der Funktion des Bremssystems eines Fahrzeugs hervor, bei dem eine Radgeschwindigkeit in Form eines Geschwindigkeit-Zeit-Profils simuliert wird. Das Geschwindigkeitsprofil wird dem Bremssystem vorgegeben und dessen Reaktion überprüft. Damit lässt sich aber kein closed-loop Testlauf unter realen Bedingungen eines Bremssystems und Antriebsstranges verwirklichen, sondern es wird lediglich eine open-loop Funktionsprüfung realisiert.

In der DE 10 2006 035 502 B3 wird ein Verfahren zur Überprüfung des Verhaltens eines Antriebsstranges mit einer mit einer Gelenkwelle verbundenen Belastungsmaschine zum Nachbilden eines Rades eines Fahrzeugs beschrieben. Dazu sind in einer Simulationseinrichtung ein Fahrzeugmodell, ein Reifenmodell und ein Bremsenmodell implementiert. Die Simulationseinrichtung ermittelt daraus ein Sollmoment, mit dem die Belastungsmaschine gesteuert wird. Ein Fahrdynamikregelsystem erfasst über einen Drehzahlsensor die Drehzahl des Rades (die in erster Näherung der Drehzahl der Belastungsmaschine entspricht) und ermittelt daraus einen Bremsdruck, der in der Simulationseinrichtung anhand des Bremsenmodells in ein Bremsmoment umgerechnet wird, das in das Sollmoment einfließt. Auf diese Weise kann die korrekte Funktionsweise des Bremssystems des durch die Belastungsmaschine nachgebildeten Rades überprüft werden.

Das Problem dabei sind die bei vielen Bremsmanövern zum Teil sehr hohen Bremskräfte und die sehr hohen Änderungsraten der Bremskräfte bzw. Bremsmomente und die hochdynamischen Reifenkräfte des Fahrzeugs, sowie die damit einhergehenden sehr hohen Beschleunigungen und Beschleunigungsgradienten. Viele Bremsmanöver unterliegen damit einer hohen Dynamik, die auf Prüfständen in der Regel nicht nachgebildet werden kann. Unter "Dynamik" wird hier allgemein verstanden, wie schnell auf Änderungen des Sollwertes einer Drehzahl oder Drehbeschleunigung oder eines Drehmomentes reagiert werden kann, also wie schnell ein neuer Sollwert eingeregelt werden kann. Der gewünschten hohen Dynamik steht ein begrenztes Übertragungsverhalten (also begrenzte Änderungsraten) des Prüfstandes, bestehend aus Regelsystemen, Messsystemen, Simulationssystemen und Aktuatoren, gegenüber, so dass hochdynamische Bremsvorgänge bzw. ein hochgenaues Einregeln der sich aus den Bremsdruckverläufen ergebenden Drehzahlen mit einem herkömmlichen Prüfstandsaufbau nicht oder nur unzureichend realisierbar sind. Die tatsächliche Drehzahl der Belastungsmaschine (Dynamometer, Dyno) dient, wie oben beschrieben, als Eingang für das Fahrdynamikregelsystem. Die Drehbeschleunigung ist durch die Prüfstands-Gelenkwelle (Welle zwischen Belastungsmaschine und Fahrzeugachse bzw. Fahrzeugrad) und die Leistungsfähigkeit der Belastungsmaschine (Drehmoment, Drehzahl) sowie durch die Verzögerungszeiten der oben genannten Systemkomponenten des Prüfstandes in der Dynamik limitiert. Somit können hochdynamische Bremsvorgänge mit einem herkömmlichen Prüfstandsaufbau, wie in der DE 10 2006 035 502 B3 beschrieben, nur unzureichend simuliert und getestet werden.

Allgemein kann gesagt werden, dass hochdynamische Prüfläufe an einem Antriebsstrang oder einem Fahrzeug, insbesondere solche, die einen Eingriff des Bremssystems bewirken, aufgrund der beschränkten Dynamik des Prüfstandes nur bedingt möglich sind und solche Prüfläufe daher nur unzureichend simuliert und getestet werden können.

Die EP 1 382 955 A2 beschreibt einen Motorprüfstand, bei dem der Verbrennungsmotor mit einer Motorsteuerung gesteuert wird und eine mit dem Motor verbundene Bremsvorrichtung mit einer Bremssteuerung. Für die Steuerung wird in einer Simulation auf Basis von Simulationsmodellen eine Fahrzeuggeschwindigkeit berechnet, wobei die Motorsteuerung eine schlupfbehaftete Fahrzeuggeschwindigkeit erhält, die Bremssteuerung aber eine Fahrzeuggeschwindigkeit ohne Berücksichtigung des Schlupfes. Ein solcher Aufbau ist aber für hochdynamische Prüfläufe an einem Antriebsstrang oder einem Fahrzeug ungeeignet.s Es ist daher eine Aufgabe der gegenständlichen Erfindung, ein verbessertes Verfahren, und einen entsprechenden Prüfstand, zum Testen eines Verbundes von Komponenten eines Fahrzeugs mit zumindest einem Fahrzeugsteuergerät anzugeben, das mit verbesserter Dynamik durchgeführt werden kann.

Diese Aufgabe wird erfindungsgemäß gelöst indem, in einer Simulationseinheit anhand eines Simulationsmodells für die zumindest eine Komponente des Verbundes aus einem im Antriebsstrang wirkenden Antriebsstrangmoment und einer Bremswirkung des Bremssystems die momentane Antriebsstrangdrehzahl dieser Komponente berechnet wird und die berechnete momentane Antriebsstrangdrehzahl vom Fahrzeugsteuergerät verwendet wird, um die zumindest eine Komponente zu regeln, und die berechnete Antriebsstrangdrehzahl von einem Antriebsregler verwendet wird, um die Belastungsmaschine zu regeln. Das Fahrzeugsteuergerät des zu testenden Verbundes von Komponenten arbeitet damit nicht mit einer im Antriebsstrang am Prüfstand gemessenen Drehzahl, sondern mit einer in einer Simulation berechneten Drehzahl. Durch dieses Vorgehen wird die Dynamik des Fahrzeugsteuergerätes von der Dynamik des Prüfstandes weitestgehend getrennt. Das Fahrzeugsteuergerät "sieht" die simulierte, d.h. die hochdynamische, berechnete, Drehzahl, und nicht eine am Prüfstand gemessene Drehzahl des Antriebsstranges mit - insbesondere bei hochdynamischen Bremsvorgängen - verzögert nachgeregelter Dynamik, und kann entsprechend mit hoher Dynamik auf Drehzahländerungen mit hohen Änderungsraten im Antriebsstrang, insbesondere hervorgerufen durch hochdynamischen Bremsvorgänge/Fahrdynamikregelvorgänge, am Prüfstand regeln. Es ist dabei sekundär, dass die Belastungsmaschine (und damit der Antriebsstrang) den extrem hochdynamischen Drehzahländerungen am Prüfstand nicht immer schnell genug folgen kann und bei hochdynamischen Regelvorgängen, die tatsächliche am Prüfstand realisierte Drehzahl von der simulierten temporär abweicht. Die exakte Nachführung der Drehzahl des Antriebsstranges ist für den Test, also für die Beurteilung des Bremsverhaltens, sekundär. Auf diese Weise lässt sich der Verbund der Komponenten des Fahrzeugs unter wesentlich realistischeren Bedingungen testen.

Ganz besonders vorteilhaft kann das erfindungsgemäße Verfahren angewendet werden, wenn das Fahrzeugsteuergerät ein Fahrdynamikregelsystem ist und in der Simulationseinheit anhand eines Simulationsmodells für ein Fahrzeugrad aus einem im Antriebsstrang wirkenden Antriebsstrangmoment und einer Bremswirkung des Bremssystems die momentane Drehzahl des Fahrzeugrades berechnet wird und die berechnete Drehzahl vom Fahrdynamikregelsystem verwendet wird, um das Bremssystem zu regeln, und die berechnete Drehzahl außerdem von einem Antriebsregler verwendet wird, um die Belastungsmaschine zu regeln. Bei dieser Ausgestaltung wird das Bremssystem gleichzeitig vom Fahrdynamikregelsystem, also dem Fahrzeugsteuergerät im zu testenden Verbund, erzeugt.

Selbstverständlich können damit, so wie im realen Fahrzeug, auch alle am Antriebsstrang angebundenen Bremssysteme, in der Regel für jedes Fahrzeugrad ein Bremssystem, auf diese Weise in Kombination mit dem Fahrdynamikregelsystem getestet werden.

Die benötigte Bremswirkung kann dabei in der Simulationseinheit anhand eines Bremssimulationsmodells für das Bremssystem berechnet werden oder kann am Prüfstand gemessen werden oder kann auch vom Fahrdynamikregelsystem selbst zur Verfügung gestellt werden. Dazu kann das Bremsmoment von der realen Bremsaktuatorik (pneumatisch oder hydraulisch) vom Prüfstand real bereitgestellt werden.

Ebenso kann der Test in vorteilhafter Weise auf einem Rollenprüfstand durchgeführt werden, wobei das aus Reifen und Bremse resultierende Belastungsdrehmoment über eine Rolle, auf der ein Fahrzeugrad angeordnet wird, in den Antriebsstrang eingeprägt wird. Damit lässt sich auch das Reifen-Fahrbahnverhalten realistischer nachbilden, was den Test als Ganzes realistischer macht.

Am Prüfstand kann das Bremssystem einen ersten und einen damit zusammenwirkenden und mechanisch mit dem Antriebsstrang verbundenen zweiten Bremsenteil umfassen. Dabei wird vom Bremssystem aus der vorgegebenen Bremswirkung (z.B. Bremskraft bzw. Bremsdruck) ein Bremsmoment real erzeugt und am Prüfstand in den Antriebsstrang eingeprägt. Das ermöglicht die Durchführung von Tests unter sehr realistischen Bremswirkungen.

Am Prüfstand kann das Bremssystem einen ersten und einen mechanisch mit dem Antriebsstrang verbundenen zweiten Bremsenteil umfassen, wobei der erste Bremsenteil vom zweiten Bremsenteil mechanisch getrennt ist, indem der erste Bremsenteil auf einen Dummybremsenteil einwirkt. Dabei wird vom Bremssystem durch die Entkopplung der Bremsenteile am Prüfstand kein Bremsmoment in den Antriebsstrang eingeprägt. Die entstehende Bremswirkung (z.B. das Bremsmoment) kann in einer Simulationseinheit berechnet werden. Die Bremswirkung des Bremssystems wird dabei indirekt über die resultierende berechnete Drehzahl und die Belastungsmaschine nachgebildet, so wie sie sich aufgrund der Bilanzierung aller Momente ergibt. Die Durchführung von Tests ist hier besonders vorteilhaft, weil nur das resultierende Moment, welches den Antriebsstrang bremst, von der Belastungsmaschine real aufgebracht werden muss. Darüber hinaus lässt es - geeignete Simulationsmodelle vorausgesetzt - auch sehr gut den Test unterschiedlicher Bremssysteme zu.

In einer weiteren Ausgestaltung ist das Bremssystem nur als Simulation in der Simulationseinheit vorhanden und die wirkende Bremswirkung wird anhand der Simulation berechnet.

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt
Fig.1 schematisch die Konfiguration eines Prüfstandes zum Testen eines Verbundes von Komponenten eines Fahrzeugs mit einem Fahrdynamikregelsystem als Fahrzeugsteuergerät,
Fig.2 eine weitere vorteilhaftes Konfiguration des Prüfstandes,
Fig.3 eine weitere vorteilhafte Konfiguration des Prüfstandes und
Fig.4 einen Rollenprüfstand zur Durchführung eines Tests eines Verbundes von Komponenten eines Fahrzeugs.

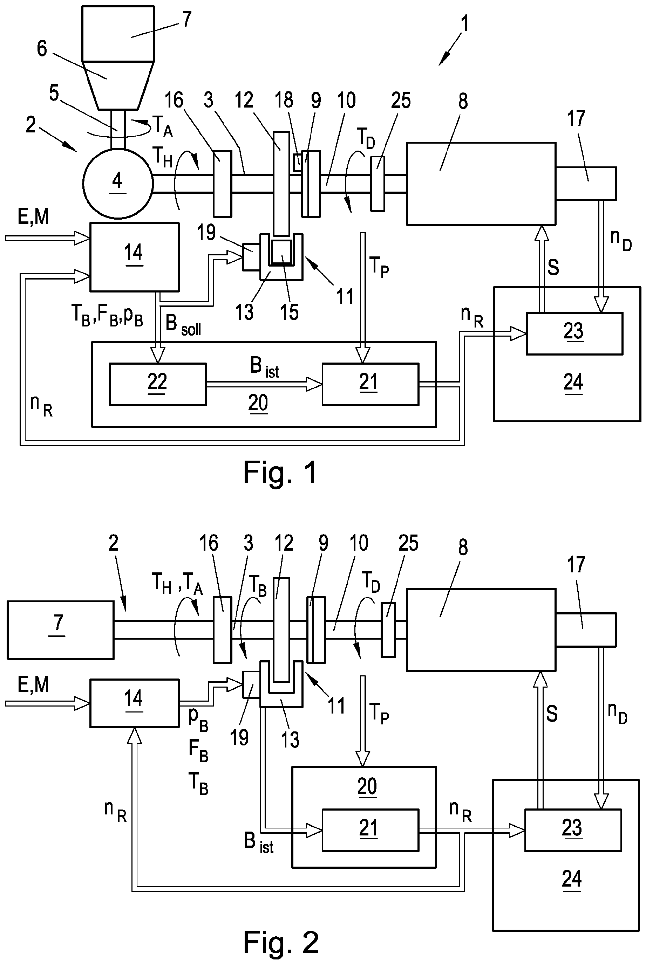

Fig.1 zeigt schematisch einen Antriebsstrangprüfstand als Prüfstand 1, mit einem Antriebsstrang 2 eines Fahrzeugs, der hier eine Seitenwelle 3, ein Differenzialgetriebe 4, eine Antriebswelle 5 und ein Getriebe 6 als reale Komponenten umfasst, die auf dem Prüfstand 1 funktionsfähig aufgebaut sind. Der Antriebsstrang 2 wird von einem Antriebsaggregat 7, wie z.B. ein Verbrennungsmotor oder ein Elektromotor, angetrieben und erzeugt ein Antriebsmoment T_{A}, das zu einem Seitenwellenmoment T_{H} führt. Allgemein wird im Folgenden von Antriebsstrangmoment T_{P} gesprochen, das allgemein ein im Antriebsstrang 2 wirkendes Drehmoment bezeichnet. Der Antriebsstrang 2 ist mit einer Belastungsmaschine 8, vorzugsweise eine elektrische Belastungsmaschine (Dyno), verbunden. Hierzu wird die Belastungsmaschine 8 mit dem Fahrzeugrad 9, von dem hier der Einfachheit halber nur die Radnabe dargestellt ist, drehfest verbunden, gegebenenfalls über eine geeignete Belastungswelle 10, beispielsweise eine Gelenkwelle. Die Belastungsmaschine 8 erzeugt ein Belastungsdrehmoment T_{D}, das in den Antriebsstrang 2 eingeprägt wird. Aufgrund der wirkenden Drehmomente stellen sich in den Komponenten des Antriebsstranges verschiedene Drehzahlen ein, wie z.B. eine Drehzahl n_{R} des Fahrzeugrades 9, oder eine Drehzahl am Ausgang des Differenzialgetriebes 4. Allgemein wird im Folgenden von Antriebsstrangdrehzahl n_{P} gesprochen, die allgemein eine im Antriebsstrang 2 wirkende Drehzahl bezeichnet.

Im realen Fahrzeug ist auch ein Bremssystem 11 mit einem ersten Bremsenteil 13 und einem zweiten Bremsenteil 12 vorgesehen, um das Fahrzeugrad 9 bzw. damit auch das Fahrzeug zu bremsen. Ein solches Bremssystem 11 ist auch am Prüfstand 1 aufgebaut. Dazu ist ein zweiter Bremsenteil 12, wie z.B. eine Bremsscheibe, eine Bremstrommel oder ähnliches, mechanisch und drehfest mit dem Antriebsstrang 2, im Normalfall mit der Seitenwelle 3 und/oder dem Fahrzeugrad 9, verbunden. Der erste Bremsenteil 13, wie z.B. ein Bremssattel oder Bremsbacken mit Bremsbelägen, wirkt in bekannter Weise mit dem zweiten Bremsenteil 12 zur dissipativen Bremsung zusammen. Der erste Bremsenteil 13 des Bremssystems 11 umfasst in bekannter Weise noch eine Betätigungseinheit 19, wie z.B. eine Hydraulik- oder Pneumatikeinheit, um zur Erzeugung einer Bremswirkung B ein Element des ersten Bremsteils 13 gegen den zweiten Bremsenteil 12 zu drücken. Durch das Bremssystem 11 wird bei einer Bremsung durch den durch das Bremssystem 11 erzeugten momentanen Bremsdruck p_{B}, bzw. die erzeugte momentane Bremskraft F_{B}, ein Bremsmoment T_{B} erzeugt, das den real vorhandenen Antriebsstrang 2, und damit auch virtuell das Fahrzeug, bremst. Allgemein wird im Folgenden für die äquivalenten Größen Bremsdruck p_{B}, Bremskraft F_{B} und Bremsmoment T_{B} auch der Begriff Bremswirkung B verwendet.

Einzelne Komponenten des Antriebsstranges 2 werden dabei in bekannter Weise von einem Fahrzeugsteuergerät 14 in Abhängigkeit von einer Antriebsstrangdrehzahl n_{P}, und gegebenenfalls von weiteren Messgrößen M und Eingangsgrößen E, gesteuert. Beispielhaft sei hier das Bremssystem 11 genannt, das im Fahrzeug, und auch am Prüfstand 1, von einem Fahrdynamikregelsystem 14 in Abhängigkeit von einer Drehzahl n_{R} des Fahrzeugrades 9 angesteuert wird. Das Fahrdynamikregelsystem 14 gibt dazu in Abhängigkeit von verschiedenen Messgrößen M und Eingangsgrößen E der Betätigungseinheit 19 des Bremssystems 11 eine Soll-Bremswirkung Bₛₒₗₗ vor, die vom Bremssystem 11 einzustellen ist. Ein anderes Beispiel ist ein Hybridsteuergerät, das einen Elektromotor des Antriebsstranges 2 in Abhängigkeit von einer Antriebsstrangdrehzahl n_{P}, und gegebenenfalls von weiteren Messgrößen M und Eingangsgrößen E, ansteuert. Allgemein wird im Folgenden von Fahrzeugsteuergerät 14 gesprochen, das allgemein ein im Fahrzeug vorhandenes Steuergerät zum Steuern einer Komponente des Fahrzeuges oder des Antriebsstranges 2 in Abhängigkeit von einer Antriebsstrangdrehzahl n_{P}, und gegebenenfalls von weiteren Messgrößen M und Eingangsgrößen E wirkende Drehzahl, bezeichnet.

Im realen Fahrzeug würde beispielsweise das Fahrzeugsteuergerät 14 als Messgröße M die Drehzahlen der Fahrzeugräder 9 von den standardmäßig verbauten Radrehzahlsensoren 18 erhalten und gegebenenfalls von anderen verbauten Sensoren noch weitere Messgrößen M des Fahrzeuges, wie z.B. Längsbeschleunigung, Querbeschleunigung, Gierraten, den Lenkwinkel, Lenkwinkelgeschwindigkeit, etc. Ebenso würde das Fahrzeugsteuergerät 14 weitere Eingangsgrößen E, wie z.B. ein Bremspedalsignal, verarbeiten. Aus diesen Größen berechnet z.B. ein Fahrdynamikregelsystem einen Soll-Bremsdruck p_{B} oder eine Soll-Bremskraft F_{B} (äquivalent auch ein Soll-Bremsmoment T_{B}), also eine Soll-Bremswirkung Bₛₒₗₗ für das Bremssystem 11, mit dem dann der erste Bremsenteil 13 über die Betätigungseinheit 19 angesteuert wird.

Dieser Verbund von Komponenten des Fahrzeugs bestehend aus einem Antriebsstrang 2 mit Antriebsaggregat 7, einem Bremssystem 11, das auf den Antriebsstrang 2 wirkt, und einem Fahrzeugsteuergerät 14 soll am Prüfstand 1 unter der Wirkung des Bremssystems 11 getestet werden, wobei die Belastungsmaschine (8) ein Belastungsdrehmoment T_{D} in den Antriebsstrang 2 einprägt. Das wird nachfolgend am konkreten Beispiel eines Fahrdynamikregelsystems als Fahrzeugsteuergerät 14 näher beschrieben.

Um das Fahrzeugsteuergerät 14, z.B. das Fahrdynamikregelsystem, auf einem Prüfstand 1 zu testen, ist in einer ersten erfindungsgemäßen Ausführung gemäß Fig.1 vorgesehen, dass der erste Bremsenteil 13 und der zweite Bremsenteil 12 mechanisch getrennt werden und der erste Bremsenteil 13 auf einen passiven Dummybremsenteil 15, wie z.B. eine Dummybremsscheibe oder eine Dummybremstrommel, wirkt. Damit wird bei einer Bremsung am Prüfstand 1 durch das Bremssystem 11 kein reales Bremsmoment T_{B} in den Antriebsstrang 2 eingeprägt.

In einer Simulationseinheit 20 ist ein Simulationsmodell 21 zur Simulation des Fahrzeugrades 9 (eventuell auch des Fahrzeugs und/oder des Reifens) implementiert, das das reale Verhalten des Fahrzeugrades 9, und eventuell des Fahrzeugs und/oder des Reifens, nachbildet. Das Simulationsmodell 21 berechnet nun aus dem aktuell im Antriebsstrang 2 wirkenden Antriebsstrangmoment T_{P}, also z.B. dem mittels Drehmomentenmesssensor 16 gemessenen, Seitenwellenmoment T_{H} und/oder dem Antriebsmoment T_{A}, und der momentanen Bremswirkung Bᵢₛₜ, wie z.B. dem sich aus dem vorgegebenen Soll-Bremsdruck p_{B} oder der Soll-Bremskraft F_{B} ergebenden momentanen Bremsmoment T_{B}, die momentane Drehzahl n_{R} des Fahrzeugrades 9 (als Antriebsstrangdrehzahl n_{P}). Ebenso können im Simulationsmodell 21 auch noch weitere Drehmomente, wie z.B. ein Reifenmoment aus einem Reifenmodell, oder weitere Größen, beispielsweise ein Widerstandsmoment aus einem Aerodynamikmodell, berücksichtigt werden. Ebenso kann das Fahrdynamikregelsystem, wie im realen Fahrzeug, natürlich auch Messgrößen M des Fahrzeuges oder Eingangsgrößen E berücksichtigen, die entweder von realen Sensoren, aus Simulationen anhand von Modellen oder aus einer übergeordneten Steuereinheit, z.B. der Prüfstandssteuereinheit 24, stammen können. Die momentane Bremswirkung Bᵢₛₜ kann dazu mit geeigneten Sensoren gemessen werden, z.B. durch Messen der Ist-Bremskraft F_{B_ist} am Dummybremsenteil 15, oder kann anhand eines Bremssimulationsmodells 22 des Bremssystems 11 auch berechnet werden, wie in Fig.1 angedeutet. Das Bremssimulationsmodell 22 berechnet dabei beispielsweise aus dem vom Fahrdynamikregelsystem vorgegebenen Soll-Bremsdruck p_{B} oder der vorgegebenen Soll-Bremskraft F_{B} das momentane Bremsmoment T_{B_ist}, bzw. allgemein die momentane Bremswirkung Bᵢₛₜ. Die momentane Bremswirkung Bᵢₛₜ kann aber auch über geeignete Schnittstellen vom Fahrdynamikregelsystem geliefert werden, in diesem Fall z.B. als Soll-Bremsmoment T_{B}, was aber für das Testen des Fahrdynamikregelsystems ausreichend genau sein kann.

Die derart berechnete Drehzahl n_{R} des Fahrzeugrades 9 wird dann unmittelbar dem Fahrdynamikregelsystem und unabhängig davon auch einem Antriebsregler 23 für die Belastungsmaschine 8, der z.B. in einer Prüfstandsteuereinheit 24 implementiert ist, übermittelt. Der Antriebsregler 23 setzt die berechnete Drehzahl n_{R} in ein Steuersignal S, wie z.B. ein Solldrehmoment für die Belastungsmaschine 8, um, um die berechnete Drehzahl n_{R} über das Belastungsdrehmoment T_{D} der Belastungsmaschine 8 im Antriebsstrang 2 einzuregeln. Dazu kann auch vorgesehen sein, dass die aktuelle Drehzahl n_{D} der Belastungsmaschine 8 mit einer Drehzahlmesseinheit 17 gemessen und dem Antriebsregler 23 übermittelt wird.

Das zu Fahrdynamikregelsystem, oder allgemein das Fahrzeugsteuergerät 14,erhält auf diese Weise nicht die am Prüfstand 1 in ihrer Dynamik beschränkte tatsächlich vorliegende Drehzahl n_{R} des Fahrzeugrades 9, die z.B. durch die verbauten Raddrehzahlsensoren (ABS-Sensoren) 18 gemessen werden könnten, bzw. allgemein die in ihrer Dynamik beschränkte tatsächlich vorliegende Antriebsstrangdrehzahl n_{P}, sondern eine hochdynamische, berechnete Drehzahl n_{R}, bzw. allgemein n_{P}. Die simulierte Drehzahl n_{R} weicht damit, insbesondere bei hochdynamischen Bremsvorgängen, von der tatsächlichen Drehzahl am Prüfstand 1 ab. Oder anders ausgedrückt, hinkt die tatsächliche Drehzahl im Antriebsstrang 2 aufgrund der beschränkten Dynamik des Prüfstandes 1 und seiner Komponenten der hochdynamisch simulierten Drehzahl n_{R} nach, da die berechnete Drehzahl n_{R} über die Belastungsmaschine 8 nicht schnell genug am Prüfstand 1 eingeregelt werden kann, was aber für den Test des Fahrdynamikregelsystems unerheblich ist. Damit ist es möglich, den Verbund der Komponenten mit dem Fahrdynamikregelsystem, bzw. allgemein mit dem Fahrzeugsteuergerät 14, und dem Bremssystem 11 am Prüfstand 1 unter noch realistischeren Bedingungen zu testen.

Obwohl die Erfindung oben nur für eine Halbachse des Fahrzeugs beschrieben ist, ist es selbstverständlich, dass alle Bremssysteme 11 an allen Achsen bzw. Halbachsen eines Fahrzeugs auf diese Weise, auch gleichzeitig, unter Wirkung des Fahrzeugsteuergeräts 14 getestet werden können, insbesondere auch nicht angetriebene Achsen des Fahrzeugs. Bekanntermaßen sind auf einem typischen Antriebsstrangprüfstand in vielen Fällen alle Fahrzeugräder 9 oder zumindest alle angetriebenen Fahrzeugräder 9 eines Fahrzeugs mit jeweils einer Belastungsmaschine 8 verbunden. Dabei wird mit dem Simulationsmodell 21 des Fahrzeugrades in der Simulationseinheit 20 die Drehzahlen n_{R} aller betrachteter Fahrzeugräder 9 berechnet und an das Fahrzeugsteuergerät 14 und die zu den Fahrzeugrädern 9 jeweils zugehörenden Antriebsregler 23 der zugehörigen Belastungsmaschinen 8 übergeben. Auf diese Weise lassen sich mit einem Fahrdynamikregelsystem als Fahrzeugsteuergerät 14 insbesondere auch sehr realistisch Stabilitätsfälle des Fahrzeugs, wie z.B. ABS (Antiblockiersystem) oder ASR (Antischlupfregelung) Eingriffe, testen.

Ebenso ist darauf hinzuweisen, dass damit in den Test nicht nur die Funktionen einer Betriebsbremse eines Fahrzeugs einfließen können, sondern gleichermaßen auch die Funktionen einer Feststellbremse.

In einer zweiten möglichen Ausgestaltung der Erfindung nach Fig.2 ist das Bremssystem 11 am Prüfstand 1 wie im Fahrzeug aufgebaut, d.h., dass der erste Bremsenteil 13 für eine dissipative Bremsung mit dem zweiten Bremsenteil 12, der wieder mechanisch und drehfest mit dem Antriebsstrang 2 verbunden ist, zusammenwirkt. Hier wird also bei einem Bremsvorgang tatsächlich ein Bremsmoment T_{B} in den Antriebsstrang 2 eingeprägt. Demgemäß muss die Bremswirkung B des Bremssystems 11 auch nicht in einer Simulationseinheit 22 simuliert werden, sondern kann direkt als momentane Bremswirkung Bᵢₛₜ gemessen werden. Das Bremssimulationsmodell 22 der Simulationseinheit 20 kann folglich eingespart werden. Trotzdem könnte aber auch ein Bremssimulationsmodell 22 implementiert sein, um die momentane Bremswirkung Bᵢₛₜ zu berechnen, beispielsweise, wenn die momentane Bremswirkung Bᵢₛₜ nicht unmittelbar oder nur schwierig gemessen werden kann. Ansonsten gilt hierzu dasselbe wie mit Bezug auf die Fig.1 ausgeführt.

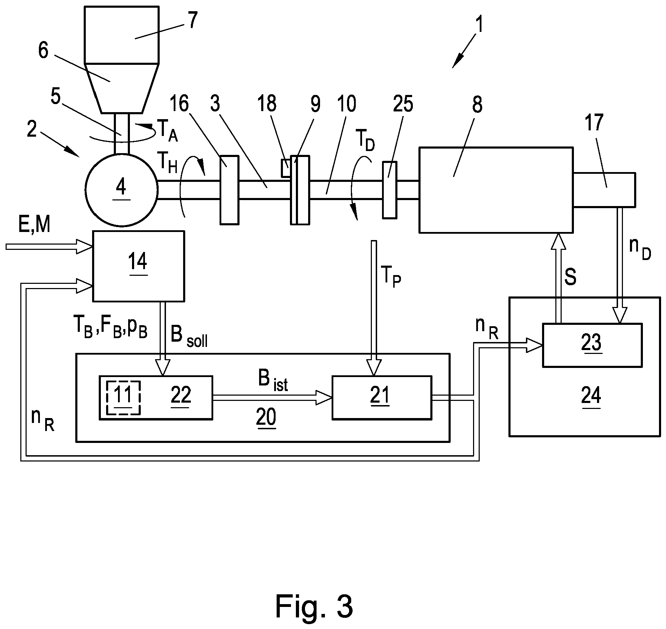

In einer dritten möglichen Ausgestaltung ist das Bremssystem 11 überhaupt nicht real aufgebaut, also weder der erste Bremsenteil 13, noch der zweite Bremsenteil 12, noch die Betätigungseinheit 19 ist real vorhanden. Das Bremssystem 11 wird hierbei komplett, oder teilweise, durch das Bremssimulationsmodell 22 der Simulationseinheit 20 simuliert und wird durch die Simulation ersetzt, wie in Fig.3 angedeutet. Das Fahrdynamikregelsystem als beispielhaftes Fahrzeugsteuergerät 14 regelt damit eine Simulation des Bremssystems 11, was für das Testen des Fahrdynamikregelsystems nach dem erfinderischen Verfahren aber unerheblich.

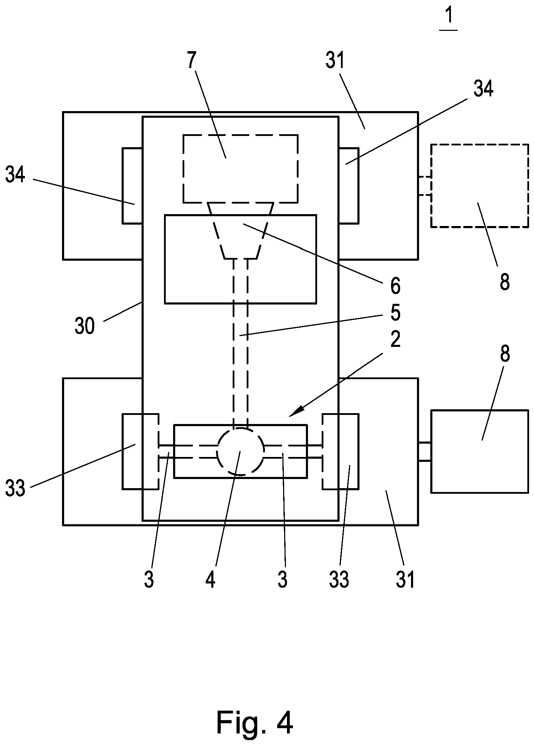

Ebenso ist es denkbar, das Fahrzeugsteuergerät 14 eines Fahrzeugs 30 mit dem Bremssystem 11 nicht auf einem Antriebsstrangprüfstand zu testen, sondern auf einem Rollenprüfstand als Prüfstand 1, wie in Fig.4 dargestellt. Hierzu wird das Fahrzeug 30 bekanntermaßen zumindest mit den angetriebenen Fahrzeugrädern 33, die am Ende des Antriebsstranges 2 an den zugehörigen Radnaben angeordnet sind, auf einer Rolle 31 angeordnet. Die Rolle 31 ist mit einer Belastungsmaschine 8 verbunden und von dieser angetrieben. Hier ist der Antriebsstrang 2 somit über die Rolle 31 mit der Belastungsmaschine 8 verbunden, die über die Rolle 31 ein Belastungsdrehmoment T_{D} in den Antriebsstrang 2 einprägt. Die Drehzahl n_{R} der Radnabe 9 entspricht hier der Drehzahl des Fahrzeugrades 33, 34. Für das Testen des Fahrzeugsteuergeräts 14 im Zusammenspiel mit dem Fahrzeug 30 ist es aber vorteilhaft, wenn auch nicht angetriebene Fahrzeugräder 34, z.B. an der Vorderachse des Fahrzeugs 30, auf einer derart angetriebenen Rolle 31 angeordnet werden. Gleichfalls wäre es auch denkbar, für jedes Fahrzeugrad 33, 34 eine eigene angetriebene Rolle 31 vorzusehen (radindividueller Antrieb), oder auch nur ein rotierendes Rad auf einer Rolle 31 anzuordnen (ein sogenanntes Corner Modul). Das Testen des Fahrzeugsteuergeräts 14 des Fahrzeugs 30 erfolgt dann wieder wie oben mit Bezugnahme auf Fig.1 bis Fig.3 beschrieben, wobei das Fahrzeugsteuergerät 14 wiederum nur berechnete, hochdynamische Drehzahlen n_{R} erhält und nicht tatsächlich am Prüfstand vorliegende Drehzahlen.

Das Beispiel des Fahrdynamikregelsystemes als Fahrzeugsteuergerät 14 ist insofern speziell, da das Fahrdynamikregelsystem die Bremswirkung Bₛₒₗₗ zur Regelung des Bremssystems 11 selbst berechnet, anhand der das Fahrdynamikregelsystem das Bremssystem 11 als Komponente des Verbundes regelt. Enthält der unter der Wirkung des Bremssystems 11 zu testende Verbund der Komponenten ein anderes Fahrzeugsteuergerät 14, das eine andere Komponente als das Bremssystem 11 regelt, bedarf es für den Test aber auch einer Ansteuerung des Bremssystems 11. Eine hierfür notwendige Bremswirkung Bₛₒₗₗ zur Steuerung des Bremssystems 11 kann dabei von einem zusätzlich vorhandenen Fahrdynamikregelsystem kommen, kann aber auch von einer anderen Steuereinheit, wie z.B. der Prüfstandsteuereinheit 24, oder sogar von einem real vorhandenen Bremspedal, das von einer Bedienperson betätigt wird, zur Verfügung gestellt werden. Allerdings sind natürlich in gleicher Weise auch hier die oben ausgeführten Ausgestaltungen des Bremssystems 11 möglich. Damit kann auch das Zusammenwirken mehrerer Fahrzeugsteuergeräte 14 im Verbund der Komponenten getestet werden.

## Patentansprüche

1. Verfahren zum Testen eines Verbundes von Komponenten eines Fahrzeugs mit einem Antriebsstrang (2) und mit zumindest einem Fahrzeugsteuergerät (14), das eine Antriebsstrangdrehzahl (n_{P}) verarbeitet, und einem Bremssystem (11), das auf den Antriebsstrang (2) wirkt, auf einem Prüfstand (1), wobei der Antriebsstrang (2) des Fahrzeugs von einem Antriebsaggregat (7) angetrieben wird und dem Antriebsstrang (2) mittels einer damit verbundenen Belastungsmaschine (8) ein Belastungsdrehmoment (T_{D}) eingeprägt wird und zumindest eine Komponente des Verbundes vom Fahrzeugsteuergerät (14) in Abhängigkeit von der Antriebsstrangdrehzahl (n_{P}) geregelt wird, **dadurch gekennzeichnet, dass** in einer Simulationseinheit (20) anhand eines Simulationsmodells (21) für die zumindest eine Komponente des Verbundes aus einem im Antriebsstrang (2) wirkenden Antriebsstrangmoment (T_{P}) und einer Bremswirkung (B) des Bremssystems (11) die momentane Antriebsstrangdrehzahl (n_{P}) dieser Komponente berechnet wird und die berechnete momentane Antriebsstrangdrehzahl (n_{P}) vom Fahrzeugsteuergerät (14) verwendet wird, um die zumindest eine Komponente zu regeln, und die berechnete Antriebsstrangdrehzahl (n_{P}) von einem Antriebsregler (23) verwendet wird, um die Belastungsmaschine (8) zu regeln.

2. Verfahren nach Anspruch 1, **dadurch gekennzeichnet, dass** das Bremssystem (11) von einem Fahrdynamikregelsystem als Fahrzeugsteuergerät (14) in Abhängigkeit von der Drehzahl (n_{R}) eines Fahrzeugrades (9) geregelt wird und in der Simulationseinheit (20) anhand eines Simulationsmodells (21) für das Fahrzeugrad (9) die momentane Drehzahl (n_{R}) des Fahrzeugrades (9) berechnet wird und die berechnete momentane Drehzahl (n_{R}) des Fahrzeugrades (9) vom Fahrdynamikregelsystem verwendet wird, um das Bremssystem (11) zu regeln, und die berechnete Drehzahl (n_{R}) des Fahrzeugrades (9) vom Antriebsregler (23) verwendet wird, um die Belastungsmaschine (8) zu regeln.

3. Verfahren nach Anspruch 1 oder 2, **dadurch gekennzeichnet, dass** die Bremswirkung (B) in der Simulationseinheit (20) anhand eines Bremssimulationsmodells (22) für das Bremssystem (11) berechnet wird.

4. Verfahren nach Anspruch 1 oder 2, **dadurch gekennzeichnet, dass** die Bremswirkung (B) des Bremssystems (11) am Prüfstand (1) gemessen wird.

5. Verfahren nach Anspruch 1 oder 2, **dadurch gekennzeichnet, dass** die Bremswirkung (B) vom Fahrdynamikregelsystem (14) zur Verfügung gestellt wird.

6. Verfahren nach einem der Ansprüche 1 bis 5, **dadurch gekennzeichnet, dass** durch das Simulationsmodell (21) auch das Fahrzeug und/oder einen Reifen des Fahrzeugrades (9) simuliert wird.

7. Verfahren nach einem der Ansprüche 1 bis 6, **dadurch gekennzeichnet, dass** das Belastungsdrehmoment (T_{D}) über eine Rolle (31), auf der ein Fahrzeugrad (9) angeordnet wird, in den Antriebsstrang (2) eingeprägt wird.

8. Prüfstand zum Testen eines Verbundes von Komponenten eines Fahrzeugs mit einem Antriebsstrang (2) und mit zumindest einem Fahrzeugsteuergerät (14), das eine Antriebsstrangdrehzahl (n_{P}) verarbeitet, und einem Bremssystem (11), das auf den Antriebsstrang (2) wirkt, auf einem Prüfstand (1), wobei ein Antriebsaggregat (7) einen Antriebsstrang (2) des Fahrzeugs antreibt und der Antriebsstrang (2) mit einer Belastungsmaschine (8) verbunden ist, die ein Belastungsdrehmoment (T_{D}) in den Antriebsstrang (2) einprägt und das Fahrzeugsteuergerät (14) zumindest eine Komponente des Verbundes in Abhängigkeit von der Antriebsstrangdrehzahl (n_{P}) regelt, **dadurch gekennzeichnet, dass** eine Simulationseinheit (20) mit einem Simulationsmodell (21) für die zumindest eine Komponente vorgesehen ist und die Simulationseinheit (20) aus einem im Antriebsstrang (2) wirkenden Antriebsstrangmoment (T_{P}) und einer Bremswirkung (B) des Bremssystems (11) die momentane Antriebsstrangdrehzahl (n_{P}) berechnet, wobei das Fahrzeugsteuergerät (14) die zumindest eine Komponente anhand der berechneten Antriebsstrangdrehzahl (n_{P}) regelt und ein Antriebsregler (23) der Belastungsmaschine (8) die Belastungsmaschine (8) anhand der berechneten Antriebsstrangdrehzahl (n_{P}) regelt.

9. Prüfstand nach Anspruch 8, **dadurch gekennzeichnet, dass** ein Fahrdynamikregelsystem vorgesehen ist, das das Bremssystem (11) in Abhängigkeit von einer Drehzahl (n_{R}) eines Fahrzeugrades (9) regelt und die Simulationseinheit (20) die momentane Drehzahl (n_{R}) des Fahrzeugrades (9) berechnet, wobei das Fahrdynamikregelsystem das Bremssystem (11) anhand der berechneten Drehzahl (n_{R}) des Fahrzeugrades (9) regelt und der Antriebsregler (23) die Belastungsmaschine (8) anhand der berechneten Drehzahl (n_{R}) des Fahrzeugrades (9) regelt.

10. Prüfstand nach Anspruch 8 oder 9, **dadurch gekennzeichnet, dass** das Bremssystem (11) einen ersten Bremsenteil (13) und einen damit zusammenwirkenden und mechanisch mit dem Antriebsstrang (2) verbundenen zweiten Bremsenteil (12) umfasst.

11. Prüfstand nach Anspruch 8 oder 9, **dadurch gekennzeichnet, dass** das Bremssystem (11) einen ersten Bremsenteil (13) und einen mechanisch mit dem Antriebsstrang (2) verbundenen zweiten Bremsenteil (12) umfasst, wobei der erste Bremsenteil (13) vom zweiten Bremsenteil (12) mechanisch getrennt ist, indem der erste Bremsenteil (13) auf einen Dummybremsenteil (15) einwirkt.

12. Prüfstand nach Anspruch 8 oder 9, **dadurch gekennzeichnet, dass** in der Simulationseinheit (20) ein Bremssimulationsmodell (22) zur Simulation des Bremssystems (11) implementiert ist.

13. Prüfstand nach einem der Ansprüche 8 bis 12, **dadurch gekennzeichnet, dass** in der Simulationseinheit (20) ein Bremssimulationsmodell (22) für das Bremsensystem (11) implementiert ist und die Simulationseinheit (20) daraus die Bremswirkung (B) berechnet.

## Claims

1. Method for testing an assembly of components of a vehicle having a drive train (2) and at least one vehicle control device (14), that processes a drive train rotary speed (n_{P}), and a braking system (11), that acts on the drive train (2), on a test stand (1), wherein the drive train (2) of the vehicle is driven by a drive unit (7) and the drive train (2) has applied thereto a load torque (T_{D}) by a load machine (8) connected thereto, and at least one component of the assembly is controlled by the vehicle control device (14) as a function of the drive train rotary speed (n_{P}), **characterized in that** in a simulation unit (20) using a simulation model (21) for the at least one component of the assembly the instantaneous drive train rotary speed (n_{P}) of the component is calculated from a drive train torque (T_{P}) acting in the drive train (2) and the braking effect (B) of the braking system (11), and the calculated instantaneous drive train rotary speed (n_{P}) is used by the vehicle control device (14) for controlling the at least one component, and the calculated drive train rotary speed (n_{P}) is used by a drive controller (23) in order to control the load machine (8).

2. The method as claimed in claim 1, **characterized in that** the braking system (11) is controlled by a dynamic stability control system as the vehicle control device (14) as a function of the rotary speed (n_{R}) of a vehicle wheel (9), and in the simulation unit (20), the instantaneous rotary speed (n_{R}) of the vehicle wheel (9) is calculated using a simulation model (21) for the vehicle wheel (9) and the calculated instantaneous rotary speed (n_{R}) of the vehicle wheel (9) is used by the dynamic stability control system for controlling the braking system (11), and the calculated rotary speed (n_{R}) of the vehicle wheel (9) is used by the drive controller (23) for controlling the load machine (8).

3. The method as claimed in claim 1 or 2, **characterized in that** the braking effect (B) is calculated in the simulation unit (20) using a brake simulation model (22) for the braking system (11).

4. The method as claimed in claim 1 or 2, **characterized in that** the braking effect (B) of the braking system (11) is measured on the test stand (1).

5. The method as claimed in claim 1 or 2, **characterized in that** the braking effect (B) is provided by the dynamic stability control system (14).

6. The method as claimed in any one of claims 1 to 5, **characterized in that** the simulation model (21) is also used to simulate the vehicle and/or a tire of the vehicle wheel (9).

7. The method as claimed in any one of claims 1 to 6, **characterized in that** the load torque (T_{D}) is applied onto the drive train (2) via a roller (31), on which a vehicle wheel (9) is arranged.

8. Test stand for testing an assembly of components of a vehicle having a drive train (2) and at least one vehicle control device (14), that processes a drive train rotary speed (n_{P}), and a braking system (11), that acts on the drive train (2), on a test stand (1), wherein a drive unit (7) drives the drive train (2) of the vehicle and the drive train (2) is connected to a load machine (8) that applies a load torque (T_{B}) onto the drive train (2), and the vehicle control device (14) controls at least one component of the assembly as a function of a drive train rotary speed (n_{P}), **characterized in that** a simulation unit (20) with a simulation model (21) for the at least one component is provided and the simulation unit (20) calculates the instantaneous drive train rotary speed (n_{P}) from a drive train torque (T_{P}) acting in the drive train (2) and from a braking effect (B) of the braking system (11), wherein the vehicle control device (14) controls the at least one component using the calculated drive train rotary speed (n_{P}), and a drive controller (23) of the load machine (8) controls the load machine (8) using the calculated drive train rotary speed (n_{P}).

9. The test stand as claimed in claim 8, **characterized in that** a dynamic stability control system is provided that controls the braking system (11) as a function of a rotary speed (n_{R}) of a vehicle wheel (9), and the simulation unit (20) calculates the instantaneous rotary speed (n_{R}) of the vehicle wheel (9), wherein the dynamic stability control system controls the braking system (11) using the calculated rotary speed (n_{R}) of the vehicle wheel (9), and the drive controller (23) controls the load machine (8) using the calculated rotary speed (n_{R}) of the vehicle wheel (9).

10. The test stand as claimed in claim 8 or 9, **characterized in that** the braking system (11) comprises a first brake portion (13) and an interacting second brake portion (12) that is mechanically connected to the drive train (2).

11. The test stand as claimed in claim 8 or 9, **characterized in that** the brake system (11) comprises a first brake portion (13) and a second brake portion (12) that is mechanically connected to the drive train (2), wherein the first brake portion (13) is mechanically separated from the second brake portion (12), by way of the first brake portion (13) acting on a dummy brake portion (15).

12. The test stand as claimed in claim 8 or 9, **characterized in that** a brake simulation model (22) for simulating the brake system (11) is implemented in the simulation unit (20).

13. The test stand as claimed in any one of claims 8 to 12, **characterized in that** a brake simulation model (22) for the brake system (11) is implemented in the simulation unit (20) and the simulation unit (20) calculates the braking effect (B) therefrom.

## Revendications

1. Procédé de test d'un assemblage de composants d'un véhicule comportant une chaîne cinématique (2) et au moins un appareil de commande du véhicule (14) qui traite une vitesse de rotation de chaîne cinématique (n_{P}), et un système de freinage (11) qui agit sur la chaîne cinématique (2), sur un banc d'essai (1), la chaîne cinématique (2) du véhicule étant entraînée par un groupe propulseur (7) et un couple de charge (T_{D}) étant appliqué sur la chaîne cinématique (2) au moyen d'une machine d'application de charge (8) reliée à celle-ci, et au moins un composant de l'assemblage étant réglé par l'appareil de commande du véhicule (14) en fonction de la vitesse de rotation de chaîne cinématique (n_{P}), **caractérisé en ce que,** dans une unité de simulation (20), la vitesse de rotation instantanée de chaîne cinématique (n_{P}) de ce composant est calculée sur la base d'un modèle de simulation (21) de l'au moins un composant de l'assemblage à partir d'un couple de chaîne cinématique (T_{P}) agissant dans la chaîne cinématique (2) et d'un effet de freinage (B) du système de freinage (11), **en ce que** la vitesse de rotation instantanée de chaîne cinématique (n_{P}) calculée est utilisée par l'appareil de commande du véhicule (14) pour commander ledit au moins un composant, et **en ce que** ladite vitesse de rotation de chaîne cinématique (n_{P}) calculée est utilisée par un régulateur d'entraînement (23) pour régler ladite machine d'application de charge (8).

2. Procédé selon la revendication 1, **caractérisé en ce que** le système de freinage (11) est commandé par un système de régulation de la dynamique de mouvement du véhicule comme appareil de commande de véhicule (14) en fonction de la vitesse de rotation (n_{R}) d'une roue de véhicule (9), **en ce que** la vitesse de rotation (n_{R}) instantanée de la roue de véhicule (9) est calculée dans l'unité de simulation (20) sur la base d'un modèle de simulation (21) de la roue de véhicule (9), **en ce que** la vitesse de rotation (n_{R}) instantanée calculée de la roue de véhicule (9) est utilisée par le système de régulation de la dynamique de mouvement du véhicule pour commander le système de freinage (11), et **en ce que** la vitesse de rotation (n_{R}) calculée de la roue de véhicule (9) est utilisée par le régulateur d'entraînement (23) pour commander la machine d'application de charge (8).

3. Procédé selon la revendication 1 ou 2, **caractérisé en ce que** l'effet de freinage (B) dans l'unité de simulation (20) est calculé sur la base d'un modèle de simulation de freinage (22) du système de freinage (11).

4. Procédé selon la revendication 1 ou 2, **caractérisé en ce que** l'effet de freinage (B) du système de freinage (11) est mesuré au niveau du banc d'essai (1).

5. Procédé selon la revendication 1 ou 2, **caractérisé en ce que** l'effet de freinage (B) est fourni par le système de régulation de la dynamique de mouvement du véhicule (14).

6. Procédé selon l'une des revendications 1 à 5, **caractérisé en ce que** le véhicule et/ou un pneumatique de la roue de véhicule (9) sont également simulés par le modèle de simulation (21).

7. Procédé selon l'une des revendications 1 à 6, **caractérisé en ce que** le couple de charge (T_{D}) est appliqué dans la chaîne cinématique (2) par l'intermédiaire d'un rouleau (31) sur lequel une roue de véhicule (9) est disposée.

8. Banc d'essai pour le test d'un assemblage de composants d'un véhicule comportant une chaîne cinématique (2) et au moins un appareil de commande du véhicule (14) qui traite une vitesse de rotation de chaîne cinématique (n_{P}), et un système de freinage (11) qui agit sur la chaîne cinématique (2), sur un banc d'essai (1), un groupe propulseur (7) entraînant une chaîne cinématique (2) du véhicule et la chaîne cinématique (2) étant reliée à une machine d'application de charge (8) qui applique un couple de charge (T_{D}) dans la chaîne cinématique (2), et l'appareil de commande (14) commandant au moins un composant de l'assemblage en fonction de la vitesse de rotation de chaîne cinématique (n_{P}), **caractérisé en ce qu'**une unité de simulation (20) comportant un modèle de simulation (21) de l'au moins un composant est prévue, et **en ce que** l'unité de simulation (20) calcule la vitesse instantanée de chaîne cinématique (n_{P}) à partir d'un couple de chaîne cinématique (T_{P}) agissant dans la chaîne cinématique (2) et d'un effet de freinage (B) du système de freinage (11), l'appareil de commande du véhicule (14) commandant l'au moins un composant sur la base de la vitesse de rotation de chaîne cinématique (n_{P}) calculée, et un régulateur d'entraînement (23) de la machine de charge (8) commandant la machine d'application de charge (8) sur la base de la vitesse de rotation de chaîne cinématique (n_{P}) calculée.

9. Banc d'essai selon la revendication 8, **caractérisé en ce qu'**un système de régulation de la dynamique de mouvement du véhicule est prévu, lequel système de régulation de la dynamique de mouvement du véhicule commande le système de freinage (11) en fonction d'une vitesse de rotation (n_{R}) d'une roue de véhicule (9), et **en ce que** l'unité de simulation (20) calcule la vitesse de rotation (n_{R}) instantanée de la roue de véhicule (9), le système de régulation de la dynamique de mouvement du véhicule commandant le système de freinage (11) sur la base de la vitesse de rotation (n_{R}) calculée de la roue de véhicule (9), et le régulateur d'entraînement (23) commandant la machine d'application de charge (8) sur la base de la vitesse de rotation (n_{R}) calculée de la roue de véhicule (9).

10. Banc d'essai selon la revendication 8 ou 9, **caractérisé en ce que** le système de freinage (11) comprend une première pièce de freinage (13) et une seconde pièce de freinage (12) qui coopère avec celle-ci et est reliée mécaniquement à la chaîne cinématique (2).

11. Banc d'essai selon la revendication 8 ou 9, **caractérisé en ce que** le système de freinage (11) comprend une première pièce de freinage (13) et une seconde pièce de freinage (12) reliée mécaniquement à la chaîne cinématique (2), la première pièce de freinage (13) étant séparée mécaniquement de la seconde pièce de freinage (12) par l'action de la première pièce de freinage (13) sur une pièce de freinage mannequin (15).

12. Banc d'essai selon la revendication 8 ou 9, **caractérisé en ce que,** dans l'unité de simulation (20), un modèle de simulation de freinage (22) est mis en oeuvre pour la simulation du système de freinage (11).

13. Banc d'essai selon l'une des revendications 8 à 12, **caractérisé en ce que,** dans l'unité de simulation (20), un modèle de simulation de freinage (22) du système de freinage (11) est mis en oeuvre, et **en ce que** l'unité de simulation (20) calcule l'effet de freinage (B) sur la base de cette mise en oeuvre.
